# FASCICULE DE BREVET EUROPEEN

(11) **EP 3 638 607 B1**
(45) Date de publication et mention de la délivrance du brevet: **14.10.2020**
(21) Numéro de dépôt: 18758542.7
(22) Date de dépôt: 30.07.2018
(51) Int. Cl.: B65G 1/04, B65G 1/06

(54) **SYSTEME DE STOCKAGE ET DE TRANSPORT D'OBJETS ENTREPOSES DANS DES RAYONNAGES D'UN ENTREPOT**
SYSTEM ZUM LAGERN UND TRANSPORTIEREN VON IN DEN REGALEN EINES LAGERS GELAGERTEN OBJEKTEN
SYSTEM FOR STORING AND TRANSPORTING OBJECTS STORED IN THE RACKS OF A WAREHOUSE

(30) Priorité: 12.10.2017 FR 1759567
(43) Date de publication de la demande: 22.04.2020
(73) Titulaire: Exotec Solutions, 59170 Croix (FR)
(72) Inventeur: MOULIN, Romain, 59000 LILLE (FR); HEITZ, Renaud, 59650 Villeuneuve d'Ascq (FR)
(74) Mandataire: Ermeneux, Bertrand
(86) Numéro de dépôt international: PCT/EP2018/070551
(87) Numéro de publication internationale: WO 2019/072432

(56) Documents cités:
- WO-A1-2016/196815
- WO-A2-2006/044108
- DE-A1-102012 017 985
- US-A1- 2005 047 895
- US-A1- 2016 289 001

## Description

### 1. Domaine de l'invention

Le domaine de l'invention est celui de la logistique en entrepôt et en particulier de la manutention et du transport de pièces ou de produits.

Plus précisément, l'invention concerne un système de stockage et de transport dans un entrepôt d'au moins un objet destiné à être entreposé dans un rayonnage dudit entrepôt.

L'invention trouve notamment une application au sein d'un entrepôt de préparation de commandes d'une chaîne logistique.

### 2. Etat de la technique

Dans les entrepôts de stockage de produits, il est connu d'utiliser des robots pour prélever des bacs contenant des produits spécifiques dans des étagères de rayonnages et les transporter jusqu'à un autre emplacement, par exemple un poste de préparation de commandes.

Pour prélever ou déposer des bacs dans des étagères de rayonnages situées en hauteur, on a pensé à équiper des robots d'une fourche télescopique coulissant sur un mât. Pour prélever un bac, la fourche se déplace le long du mât jusqu'à atteindre une position en hauteur située juste sous le niveau inférieur du bac, puis se glisse sous le bac en se déployant. En levant légèrement la fourche, le robot soulève alors le bac de l'étagère où il est posé et peut le déplacer.

Cette technique de fourche télescopique présente cependant l'inconvénient que les bacs sont en porte à faux sur la fourche lors de leur transport, ce qui peut déstabiliser le robot. Par ailleurs, il faut prévoir des fourches qui ne plient pas sous la charge afin qu'elles ne viennent pas buter sur le bac situé en dessous de celui qui est prélevé, ce qui alourdit l'ensemble du robot.

On a également proposé de mettre en œuvre, pour prélever des bacs, deux bras qui se glissent sur les côtés du bac et desquels sortent des doigts permettant de tirer le bac.

Un inconvénient de cette technique connue est qu'il faut prévoir un espace entre les bacs pour glisser les bras, ce qui réduit le nombre de bacs pouvant être stockés sur un rayonnage.

Un autre inconvénient de cette technique connue est qu'elle est complexe à mettre en œuvre du fait qu'il faut prévoir un actionneur pour chaque doigt.

On connait par ailleurs du document US 2016/289001 A1 un robot coulissant le long d'un mat fixé au sol permettant de prélever des semiconducteurs dans des étagères.

On connait également du document WO 2016/196815 A1 un robot pouvant grimper entre deux rayonnages, équipé de bras coulissants permettant de saisir des bacs par les côtés. Le document WO 2016/196815 A1 décrit un système de stockage et de transport selon le préambule de la revendication 1.

### 1. Objectifs de l'invention

L'invention a donc notamment pour objectif de pallier les inconvénients de l'état de la technique cités ci-dessus.

Plus précisément l'invention a pour objectif de fournir une technique de stockage et de transport d'objets dans un entrepôt qui soit simple à mettre en œuvre.

Un objectif de l'invention est notamment de fournir une telle technique qui puisse être mise en œuvre dans un entrepôt où les produits sont stockés dans des bacs peu espacés les uns des autres dans des rayonnages.

Un autre objectif de l'invention est de fournir une telle technique qui soit légère.

Un objectif de l'invention est également de proposer une telle technique qui soit d'un coût de revient réduit.

Encore un objectif de l'invention est de fournir une telle technique qui soit robuste et fiable.

### 2. Exposé de l'invention

Ces objectifs, ainsi que d'autres qui apparaitront par la suite sont atteints à l'aide d'un système de stockage et de transport dans un entrepôt
d'au moins un objet destiné à être entreposé dans un rayonnage dudit entrepôt, comprenant :
- au moins un bac apte à accueillir ledit objet et apte à être logé dans ledit rayonnage ;
- un chariot motorisé comprenant des moyens de grimpe aptes à coopérer avec ledit rayonnage pour permettre audit chariot de s'élever le long dudit rayonnage, ledit chariot comprenant un dispositif de préhension et de dépose dudit bac,

Selon l'invention, ledit dispositif de préhension et de dépose comprend un support monté mobile par rapport au châssis dudit chariot entre :
- une position déployée, dans laquelle ledit support s'étend au moins partiellement sur un bord latéral dudit chariot hors de l'alignement dudit châssis ; et
- une position escamotée, dans laquelle ledit support est logé en vis-à-vis dudit châssis ;
ledit support comprenant un plateau, un cadre ou une barre, et au moins un doigt saillant fixe par rapport audit élément structurel et orienté vers le haut,
et le fond dudit bac présente au moins une empreinte configurée de sorte à pouvoir loger au moins une portion dudit doigt.

Ainsi, de façon inédite et particulièrement astucieuse, l'invention propose de prélever, ou respectivement, de déposer un bac de stockage de produits dans un rayonnage par le dessous en engageant au moins partiellement un ou plusieurs doigts dans des empreintes formées dans le fond du bac, pour pouvoir soulever et tirer le bac.

On entend par ailleurs par l'expression « orienté vers le haut » que le doigt saillant est orienté dans une direction sensiblement verticale et pointe dans un sens opposé à celui du sol.

De façon avantageuse, ledit support est monté mobile par rapport audit châssis de sorte à pouvoir prendre une première position déployée dans laquelle ledit support s'étend d'un côté latéral dudit châssis et une deuxième position déployée, dans laquelle ledit support s'étend de l'autre côté latéral dudit châssis.

Il est ainsi possible de prélever des bacs dans des rayonnages d'un côté ou de l'autre du chariot.

Selon un aspect particulier de l'invention, ledit support comprend quatre doigts agencés les uns par rapport aux autres de façon à former un rectangle.

Dans des variantes de ce mode de réalisation de l'invention, ledit support peut comprendre deux doigts, trois doigts alignés ou agencés les uns par rapport aux autres de façon à former un triangle.

Selon un mode de réalisation avantageux de l'invention, ledit support est solidarisé à une glissière guidée sur un rail, s'étendant dans une direction perpendiculaire au sens d'avance dudit chariot.

Dans un mode de réalisation particulier de l'invention, ledit support est formé monobloc.

Dans un mode de réalisation particulièrement avantageux de l'invention, ledit chariot motorisé est un chariot motorisé à guidage automatique.

Avantageusement, ledit châssis présente une butée verticale destinée à empêcher ledit bac de glisser dans la direction de ladite butée, lorsque ledit dispositif de préhension et de dépose est dans ladite position escamotée et supporte ledit bac.

Selon un aspect préférentiel de l'invention, ledit bac est en matière plastique moulée par injection.

De façon préférentielle, le fond dudit bac présente au moins deux empreintes configurées chacune de sorte à pouvoir loger au moins une portion dudit doigt et disposées de façon symétrique par rapport à un axe de symétrie dudit fond.

Ainsi, il est possible de prélever le bac dans un rayonnage quelle que soit le sens dans lequel il est posé sur ce dernier.

Selon un mode de réalisation avantageux de l'invention, lesdits moyens de grimpe comprennent au moins deux roues dentées motorisées d'axes sensiblement orthogonaux aux axes des roues de roulage dudit chariot aptes à s'engrener avec les maillons d'une chaîne à rouleau sensiblement tendue ou les dents d'une crémaillère s'étendant le long d'un montant dudit rayonnage.

### 5. Liste des figures

D'autres caractéristiques et avantages de l'invention apparaitront plus clairement à la lecture de la description suivante d'un mode de réalisation de l'invention, donné à titre de simple exemple illustratif et non limitatif, et des dessins annexés parmi lesquels :
- la figure 1 est une vue en perspective d'un exemple de mode de réalisation d'un système de stockage et de transport d'objets selon l'invention, dans laquelle le plateau du dispositif de préhension et de dépôt d'un bac est déployé ;
- la figure 2 est une vue de dessous d'un des bacs du système de stockage et de transport d'objets selon l'invention présenté en référence à la figure 1 ;
- les figures 3A à 3D illustrent le chariot motorisé du système de stockage et de transport d'objets selon l'invention présenté en référence à la figure 1 respectivement au sol, à l'approche d'un bac, lorsque son plateau coulissant est déployé sous le bac et lorsque son plateau coulissant est solidarisé au bac.

### 6. Description détaillée de l'invention

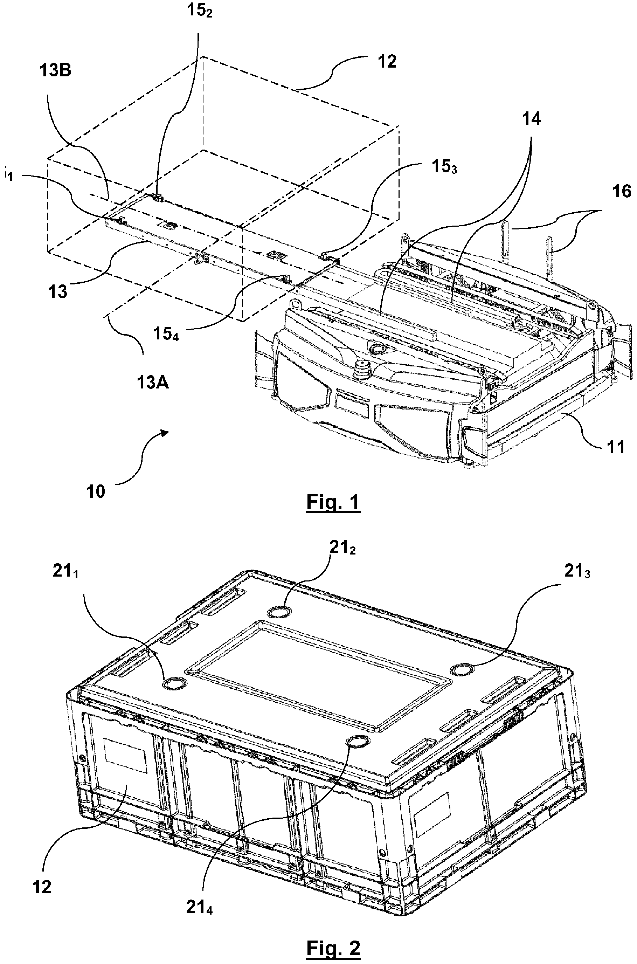

On a illustré sur la figure 1, un exemple de mode de réalisation d'un système 10 de stockage et de transport d'objets en entrepôt selon l'invention.

Ce système 10 comprend un chariot motorisé 11 à guidage automatique et un bac 12 en polypropylène de forme sensiblement parallélépipédique rectangle (représenté de façon schématique en traits pointillés sur la figure 1) permettant de stocker des produits.

Le chariot 11 est équipé de quatre roues de roulage (non représentées sur la figure 1) pour pouvoir se déplacer sur le sol d'un entrepôt et de quatre roues dentées (masquées sur la figure 1) d'axes perpendiculaires aux roues de roulage pouvant se déployer sur les côtés du chariot pour lui permettre de grimper entre deux rayonnages en vis-à-vis le long de leurs montants.

Sur sa face supérieure, le chariot 11 présente un plateau 13, permettant de supporter le bac 12, monté sur deux glissières 14 sur rails, représenté dans une position déployée sur un côté du chariot 11 sur la figure 1. Comme on peut le voir sur la figure 1, le plateau 13 s'étend entièrement hors de l'alignement dudit châssis du chariot 11 sur le bord latéral gauche du chariot, lorsqu'il est complètement déployé. Grâce à un moteur permettant d'actionner les glissières 14 (non représenté sur la figure 1), le plateau 13 peut également coulisser vers le châssis jusqu'à une position escamotée dans laquelle le plateau 13 surplombe le châssis du chariot 11. Il convient de noter que dans la position escamotée le bac 12 peut venir en butée sur les deux ergots verticaux 16 faisant saillie du châssis du chariot 11, pour prévenir une chute.

Quatre doigts 15₁ à 15₄ sont vissés sur le plateau 13, chacun à proximité d'un des coins supérieurs du plateau 13, dans des positions symétriques par rapport aux deux axes de symétrie 13A et 13B du plateau rectangulaire 13.

Comme on peut le voir sur la figure 2, dans une vue de dessous du bac 12, le fond du bac 12 présente quatre empreintes creuses 21₁ à 21₄ sensiblement cylindriques formant les coins d'un rectangle de forme identique à celui formé par les doigts 15₁ à 15₄ du plateau 13.

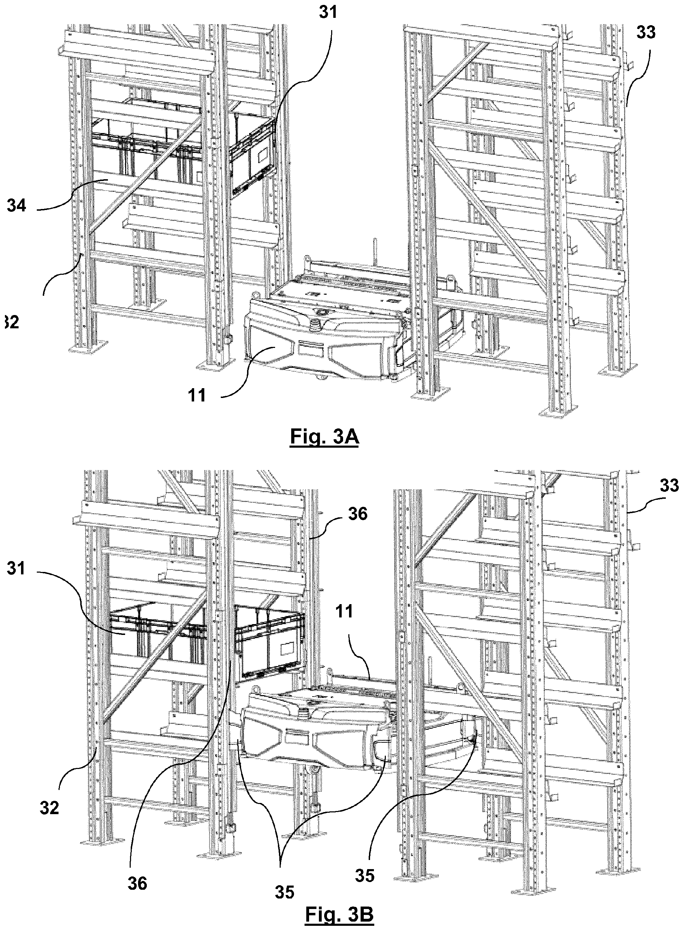

On décrit par la suite les différentes étapes permettant au chariot 11 de venir prélever un bac 31 identique au bac 12 dans un rayonnage d'entrepôt 32 en référence aux figures 3A à 3D. Dans cet exemple, le bac 31 est stocké sur la troisième rangée en hauteur du rayonnage 32 et repose sur ses bords sur deux cornières en "L" 34 du rayonnage 32.

Dans une première étape, illustrée par la figure 3A, le chariot 11 s'avance au sol et s'arrête devant le rayonnage 32 contenant le bac 31, en laissant le bac 31 sur son côté gauche.

Le chariot 11 déploie alors transversalement les quatre bras 35 portant des roues dentées, de façon à ce qu'elles viennent s'engrener avec des chaines 36 tendues sur les montants du rayonnage 31 et du rayonnage 32 situé en vis-à-vis de ce dernier, et grimpe le long des rayonnages, en commandant la rotation des roues dentées, jusqu'à une position, illustrée sur la figure 3B, où la face supérieure du plateau 13 est située à une hauteur inférieure de quelques centimètres de celle de la surface du fond du bac 12.

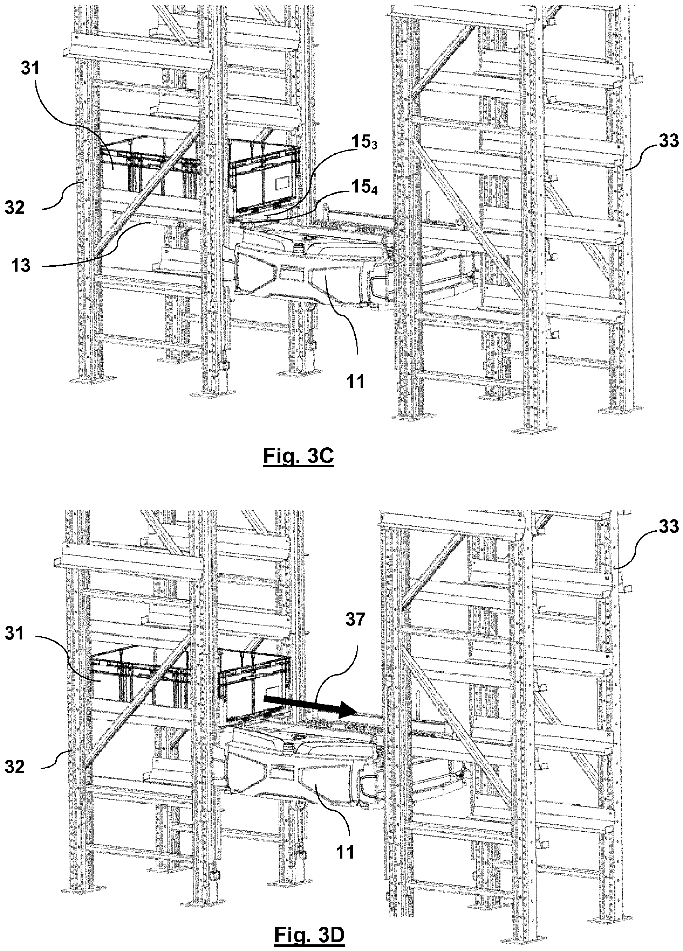

Le chariot 11 actionne ensuite le moteur permettant de faire coulisser les glissières 14 sur le côté gauche de son châssis, de façon à déployer le plateau 13 sous le bac 12 à partir de la position escamotée illustrée sur la figure 3B, jusqu'à une position de déploiement complet, illustrée sur la figure 3C.

Dans une dernière étape, illustrée sur la figure 3D, le chariot 11 s'élève à nouveau le long des montants de quelques centimètres de façon à faire pénétrer la partie supérieure des doigts 15₁ à 154 dans les empreintes 21₁ à 21₄ du fond du bac puis s'élève encore de deux centimètres de sorte à soulever le bac légèrement au dessus des cornières 34.

Il suffit alors au chariot 11 de ramener le plateau 13 dans sa position escamotée, en faisant coulisser les glissières 14 dans le sens de la flèche 37, pour pouvoir redescendre avec le bac 31 le long des montants des rayonnages 32, 33.

Bien que l'invention ait été décrite en liaison avec un mode de réalisation particulier, elle n'y est nullement limitée et s'étend à tous les équivalents techniques des moyens décrits ainsi que leurs combinaisons si celles-ci entrent dans le cadre de l'invention.

## Revendications

1. Système de stockage (10) et de transport dans un entrepôt d'au moins un objet destiné à être entreposé dans un rayonnage (32) judit entrepôt, comprenant :
- au moins un bac (12,31) apte à accueillir ledit objet et apte à être logé dans ledit rayonnage ;
- un chariot motorisé(11) comprenant des moyens de grimpe aptes à coopérer avec ledit rayonnage pour permettre audit chariot de s'élever le long dudit rayonnage, ledit chariot comprenant un dispositif de préhension et de dépose dudit bac, ledit dispositif de préhension et de dépose comprenant un support monté mobile par rapport au châssis dudit chariot entre :
- une position déployée, dans laquelle ledit support s'étend au moins partiellement sur un bord latéral dudit chariot hors de l'alignement dudit châssis ; et
- une position escamotée, dans laquelle ledit support est logé en vis-à-vis dudit châssis ;
comprenant un plateau (13), un cadre ou une barre et **caractérisé en ce qu'**il comprend au moins un doigt saillant fixe (15₁, 15₂, 15₃, 15₄) par rapport audit plateau, audit cadre ou à ladite barre, orienté vers le haut, et **en ce que** le fond dudit bac présente au moins une empreinte (211,212,213,214) configurée de sorte à pouvoir loger au moins une portion dudit doigt.

2. Système de stockage et de transport selon la revendication 1, **caractérisé en ce que** ledit support est monté mobile par rapport audit châssis de sorte à pouvoir prendre une première position déployée dans laquelle ledit support s'étend d'un côté latéral dudit châssis et une deuxième position déployée, dans laquelle ledit support s'étend de l'autre côté latéral dudit châssis.

3. Système de stockage et de transport selon l'une quelconque des revendications 1 et 2, **caractérisé en ce que** ledit support comprend quatre doigts (15₁, 15₂, 15₃, 15₄)
agencés les uns par rapport aux autres selon un motif rectangulaire.

4. Système de stockage et de transport selon l'une quelconque des revendications 1 à 3, **caractérisé en ce que** ledit support est solidarisé à une glissière (14) guidée sur un rail, s'étendant dans une direction perpendiculaire au sens d'avance dudit chariot (11).

5. Système de stockage et de transport selon l'une quelconque des revendications 1 à 4, **caractérisé en ce que** ledit support est formé monobloc.

6. Système de stockage et de transport selon l'une quelconque des revendications 1 à 5, **caractérisé en ce que** ledit chariot motorisé (11) est un chariot motorisé à guidage automatique.

7. Système de stockage et de transport selon l'une quelconque des revendications 1 à 6, **caractérisé en ce que** ledit châssis présente une butée verticale (16) destinée à empêcher ledit bac (12,31) de glisser dans la direction de ladite butée, lorsque ledit dispositif de préhension et de dépose est dans ladite position escamotée et supporte ledit bac.

8. Système de stockage et de transport selon l'une quelconque des revendications 1 à 7, **caractérisé en ce que** ledit bac est en matière plastique moulée par injection.

9. Système de stockage et de transport selon l'une quelconque des revendications 1 à 8, **caractérisé en ce que** le fond dudit bac présente au moins deux empreintes (21₁,21₂,21₃,21₄) configurées chacune de sorte à pouvoir loger au moins une portion dudit doigt et disposées de façon symétrique par rapport à un axe de symétrie dudit fond.

10. Système de stockage et de transport selon l'une quelconque des revendications 1 à 9, **caractérisé en ce que** lesdits moyens de grimpe comprennent au moins deux roues dentées motorisées d'axes sensiblement orthogonaux aux axes des roues de roulage dudit chariot aptes à s'engrener avec les maillons d'une chaîne à rouleau sensiblement tendue ou les dents d'une crémaillère s'étendant le long d'un montant dudit rayonnage (32).

## Patentansprüche

1. System (10) zum Lagern und Transportieren in einem Lager mindestens eines Objekts, das bestimmt ist, in einem Regal (32) des Lagers gelagert zu sein, umfassend:
- mindestens einen Behälter (12,31), der imstande ist, das Objekt aufzunehmen und imstande ist, in dem Regal abgelegt zu sein;
- einen motorisierten Wagen (11), der Klettermittel umfasst, die imstande sind, mit dem Regal zusammenzuwirken, um dem Wagen zu erlauben, sich entlang des Regals nach oben zu bewegen, wobei der Wagen eine Greif- und Ablagevorrichtung des Behälters umfasst,
die Greif- und Ablagevorrichtung eine Stütze umfassend, die in Bezug auf das Gestell des Wagens beweglich angebracht ist zwischen:
- einer ausgefahrenen Position, in welcher sich die Stütze mindestens teilweise über einen seitlichen Rand des Wagens außerhalb der Flucht des Gestells erstreckt; und
- einer eingefahrenen Position, in welcher die Stütze gegenüber dem Gestell abgelegt ist;
umfassend eine Platte (13), einen Rahmen oder eine Stange
**dadurch gekennzeichnet, dass** die Stütze mindestens einen in Bezug auf die Platte, den Rahmen oder die Stange festen hervorstehenden Finger (15₁,15₂,15₃,15₄), der nach oben zeigt,
und dass der Boden des Behälters mindestens einen Abdruck (21₁,21₂,21₃,21₄) aufweist, der ausgelegt ist, um mindestens einen Abschnitt des Fingers ablegen zu können.

2. Lager- und Transportsystem nach Anspruch 1, **dadurch gekennzeichnet, dass** die Stütze in Bezug auf das Gestell derart beweglich angebracht ist, dass sie eine erste ausgefahrene Position einnehmen kann, in welcher sich die Stütze auf einer seitlichen Seite des Gestells erstreckt, und eine zweite ausgefahrene Position, in welcher sich die Stütze auf der anderen seitlichen Seite des Gestells erstreckt.

3. Lager- und Transportsystem nach einem der Ansprüche 1 und 2, **dadurch gekennzeichnet, dass** die Stütze vier Finger (15₁,15₂,15₃,15₄) umfasst, die im Verhältnis zueinander gemäß einem rechteckigen Motiv eingerichtet sind.

4. Lager- und Transportsystem nach einem der Ansprüche 1 bis 3, **dadurch gekennzeichnet, dass** die Stütze mit einer auf einer Schiene geführten Laufschiene (14) fest verbunden ist, die sich in einer Richtung erstreckt, die senkrecht zur Fortbewegungsrichtung des Wagens (11) ist.

5. Lager- und Transportsystem nach einem der Ansprüche 1 bis 4, **dadurch gekennzeichnet, dass** die Stütze einblockgeformt ist.

6. Lager- und Transportsystem nach einem der Ansprüche 1 bis 5, **dadurch gekennzeichnet, dass** der motorisierte Wagen (11) ein motorisierter Wagen mit automatischer Führung ist.

7. Lager- und Transportsystem nach einem der Ansprüche 1 bis 6, **dadurch gekennzeichnet, dass** das Gestell einen vertikalen Anschlag (16) aufweist, der bestimmt ist zu verhindern, dass der Behälter (12,31) in Richtung des Anschlags gleitet, wenn die Greif- und Ablagevorrichtung in der eingefahrenen Position ist und den Behälter stützt.

8. Lager- und Transportsystem nach einem der Ansprüche 1 bis 7, **dadurch gekennzeichnet, dass** der Behälter aus spritzgeformtem Kunststoff ist.

9. Lager- und Transportsystem nach einem der Ansprüche 1 bis 8, **dadurch gekennzeichnet, dass** der Boden des Behälters mindestens zwei Abdrücke (21₁,21₂,21₃,21₄) aufweist, die jeweils ausgelegt sind, um mindestens einen Abschnitt des Fingers ablegen zu können und symmetrisch in Bezug auf eine Symmetrieachse des Bodens angeordnet sind.

10. Lager- und Transportsystem nach einem der Ansprüche 1 bis 9, **dadurch gekennzeichnet, dass** die Klettermittel mindestens zwei motorisierte Zahnräder mit etwa orthogonalen Achsen zu den Achsen der Rollräder des Wagens umfassen, die imstande sind, in Glieder einer etwa gespannten Rollenkette einzugreifen oder die Zähne einer Laufschiene, die sich entlang eines Holms des Regals (32) erstreckt.

## Claims

1. A system (10) for storing and transporting in a warehouse at least one object to be stored in a rack (32) of said warehouse, comprising:
- at least one container (12,31) suitable for receiving said object and capable of being housed in said rack;
- a motorised trolley (11) comprising climbing means capable of cooperating with said rack to allow said trolley to rise along said rack, said trolley comprising a device for gripping and depositing said container,
said gripping and depositing device comprising a carrier mounted so as to be movable relative to the chassis of said trolley between:
- a deployed position, wherein said carrier extends at least partially over a side edge of said trolley out of alignment with said chassis; and
- a retracted position, in which said carrier is housed opposite said chassis;
sais carrier comprising a tray (13), a frame or a bar,
wherein the carrier comprises at least one projecting finger (15₁,15₂,15₃,15₄) fixed with respect to said tray, frame or bar, facing upwards,
and in that the bottom of said container has at least one fingerprint (21₁,21₂,21₃,21₄) configured to accommodate at least a portion of said finger.

2. The storage and transport system according to claim 1, **characterised in that** said carrier is movably mounted with respect to said chassis so as to be able to assume a first deployed position in which said carrier extends on one lateral side of said chassis and a second deployed position in which said carrier extends on the other lateral side of said chassis.

3. The storage and transport system according to any one of claims 1 and 2, **characterised in that** said carrier comprises four fingers (15₁,15₂,15₃,15₄) arranged relative to each other in a rectangular pattern.

4. The storage and transport system according to any one of claims 1 to 3, **characterised in that** said carrier is secured to a slide (14) guided on a rail, extending in a direction perpendicular to the direction of advance of said trolley (11).

5. The storage and transport system according to any one of claims 1 to 4, **characterized in that** said carrier is formed in one piece.

6. The storage and transport system according to any of claims 1 to 5, **characterized in that** said motorized trolley (11) is an automated guided motorized trolley.

7. The storage and transport system according to any one of claims 1 to 6, **characterized in that** said chassis has a vertical stop (16) for preventing said container (12,31) from sliding in the direction of said stop, when said gripping and depositing device is in said retracted position and carriers said container.

8. The storage and transport system according to any one of claims 1 to 7, **characterized in that** said container is made of injection-moulded plastic material.

9. The storage and transport system according to any one of claims 1 to 8, **characterised in that** the bottom of said container has at least two fingerprints (21₁,21₂,21₃,21₄) each configured to accommodate at least a portion of said finger and arranged symmetrically with respect to an axis of symmetry of said bottom.

10. The storage and transport system according to any one of claims 1 to 9, **characterised in that** said climbing means comprise at least two motorised toothed wheels with axes substantially orthogonal to the axes of the running wheels of said carriage adapted to mesh with the links of a substantially tensioned roller chain or the teeth of a rack extending along an upright of said rack (32).
